# EUROPEAN PATENT APPLICATION

(11) **EP 4 742 403 A1**
(43) Date of publication of application: **13.05.2026**
(21) Application number: 24863244.0
(22) Date of filing: 06.09.2024
(51) Int. Cl.: H01M 50/367, H01M 50/502, H01M 10/6556, H01M 10/613, H01M 50/211, H01M 50/342, H01M 10/6551, H01M 50/291, H01M 50/249, B60L 1/04

(54) **BATTERY PACK COMPRISING BATTERY ASSEMBLY, AND ELECTRIC VEHICLE COMPRISING BATTERY PACK**

(30) Priority: 08.09.2023 KR 20230119644; 08.08.2024 KR 20240105823
(71) Applicant: LG Energy Solution, Ltd., Seoul 07335 (KR)
(72) Inventor: KIM, Jae Wook, Daejeon 34122 (KR); KIM, Gwan Woo, Daejeon 34122 (KR); JANG, Sung Hwan, Daejeon 34122 (KR); KIM, Da Young, Daejeon 34122 (KR)
(74) Representative: BCKIP Part mbB
(86) International application number: PCT/KR2024/013472
(87) International publication number: WO 2025/053665

(57) **Abstract**

The present technology provides a battery pack including a pack housing, and a battery assembly in the pack housing, in which the battery assembly includes a first cell block with a plurality of first battery cells, a second cell block with a plurality of second battery cells, a case including a first accommodation space for accommodation of the first cell block and a second accommodation space for accommodation of the second cell block, and supported by the pack housing, and an isolation structure provided between the first cell block and the second cell block to partition the first accommodation space and the second accommodation space of the case, the isolation structure including a plurality of venting channels extending in a vertical direction, the case includes a first venting hole overlapping the isolation structure in the vertical direction, and the plurality of venting channels of the isolation structure communicate with a venting space between the case and the pack housing through the first venting hole of the case.

## Description

### [Technical Field]

The present invention relates to a battery pack including a battery assembly, and an electric vehicle including the battery pack.

This application claims the benefit of priority based on Korean Patent Application No. 10-2023-0119644, filed on September 8, 2023 and Korean Patent Application No. 10-2024-0105823, filed on August 8, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles. As secondary batteries are used for mobility, research is being conducted on technology of enhancing energy density of secondary batteries.

### [Disclosure]

### [Technical Problem]

The present invention is directed to providing a battery pack including a battery assembly, and an electric vehicle including the battery pack.

### [Technical Solution]

An aspect of the present invention provides a battery pack including a pack housing, and a battery assembly accommodated in the pack housing, in which the battery assembly includes a first cell block with a plurality of first battery cells, a second cell block with a plurality of second battery cells, a case including a first accommodation space for accommodation of the first cell block and a second accommodation space for accommodation of the second cell block, and supported by the pack housing, and an isolation structure provided between the first cell block and the second cell block to partition the first accommodation space and the second accommodation space of the case, the isolation structure including a plurality of venting channels extending in a vertical direction, the case includes a first venting hole overlapping the isolation structure in the vertical direction, and the plurality of venting channels of the isolation structure communicate with a venting space between the case and the pack housing through the first venting hole of the case.

In example embodiments, the case may include a first cover plate facing an upper surface of the first cell block and an upper surface of the second cell block, a second cover plate facing a lower surface of the first cell block and a lower surface of the second cell block and including the first venting hole, and a pair of side cover plates spaced apart from each other in a horizontal direction with the first cell block and the second cell block interposed therebetween, the pair of side cover plates being coupled to the first cover plate and the second cover plate, respectively, the pack housing may include a bottom plate spaced apart from the second cover plate with the venting space therebetween, and a plurality of support structures provided on the bottom plate and configured to support the pair of side cover plates, and the plurality of support structures may support the pair of side cover plates to cause the case to be spaced apart from the bottom plate of the pack housing.

In example embodiments, each of the pair of side cover plates may include a fastening frame configured to be fastened to a corresponding support structure among the plurality of support structures.

In example embodiments, the plurality of first battery cells may be arranged between the pair of side cover plates in the horizontal direction, and the plurality of second battery cells may be arranged between the pair of side cover plates in the horizontal direction.

In example embodiments, the second cover plate may further include a plurality of second venting holes communicating with the venting space, and the plurality of second venting holes may overlap the first cell block or the second cell block in the vertical direction.

In example embodiments, the first cover plate may include a cooling channel configured to allow a cooling fluid to flow therethrough.

In example embodiments, the battery pack may further include a thermally conductive adhesive layer configured to attach each of the first cell block and the second cell block to the first cover plate.

In example embodiments, the pack housing may further include a pack lid configured to cover the battery assembly, and the pack lid may be in contact with the first cover plate of the case.

In example embodiments, the isolation structure may include an isolation plate between the first cell block and the second cell block, and a plurality of first guides extending in the vertical direction along a first surface of the isolation plate facing the first cell block, and the plurality of venting channels may include a plurality of first venting channels defined by the plurality of first guides.

In example embodiments, the isolation structure may further include a plurality of second guides extending in the vertical direction along a second surface of the isolation plate facing the second cell block, and the plurality of venting channels may further include a plurality of second venting channels defined by the plurality of second guides.

In example embodiments, the battery pack may further include a first bus bar frame on which a first bus bar connected to the first cell block is mounted, a first end plate configured to cover the first bus bar frame, a second bus bar frame on which a second bus bar connected to the second cell block is mounted, and a second end plate configured to cover the second bus bar frame, and spaced apart from the first end plate with the isolation structure therebetween, each of the plurality of first guides may include a stepped part in contact with a stepped part of the first end plate, and each of the plurality of second guides may include a stepped part in contact with a stepped part of the second end plate.

In example embodiments, the isolation structure may further include a connection plate connected to an upper end of the isolation plate and attached to the case.

An aspect of the present invention provides an electric vehicle including a vehicle body frame, and a battery pack including a pack housing mounted on the vehicle body frame and a battery assembly accommodated in the pack housing, in which the battery assembly includes a first cell block including a plurality of first battery cells, a second cell block with a plurality of second battery cells, a case including a first accommodation space for accommodation of the first cell block and a second accommodation space for accommodation of the second cell block, the case being supported by the pack housing, and an isolation structure provided between the first cell block and the second cell block to partition the first accommodation space and the second accommodation space of the case, the isolation structure including a plurality of venting channels extending in a vertical direction, the case includes a first venting hole overlapping the isolation structure in the vertical direction, and the plurality of venting channels of the isolation structure communicate with a venting space between the case and the pack housing through the first venting hole of the case.

In example embodiments, the case may include a first cover plate facing an upper surface of the first cell block and an upper surface of the second cell block and including a cooling channel configured to allow a cooling fluid to flow therethrough, a second cover plate facing a lower surface of the first cell block and a lower surface of the second cell block and including the first venting hole; and a pair of side cover plates spaced apart from each other in a horizontal direction with the first cell block and the second cell block interposed therebetween, the pair of side cover plates being coupled to the first cover plate and the second cover plate, respectively, the pack housing may include a bottom plate spaced apart from the second cover plate with the venting space therebetween, and a plurality of support structures provided on the bottom plate and configured to support the pair of side cover plates, the plurality of support structures may support the pair of side cover plates to cause the case to be spaced apart from the bottom plate of the pack housing, the plurality of first battery cells may be arranged between the pair of side cover plates in the horizontal direction, and the plurality of second battery cells may be arranged between the pair of side cover plates in the horizontal direction.

In example embodiments, the isolation structure may include an isolation plate between the first cell block and the second cell block, a connection plate connected to an upper end of the isolation plate and attached to the case, a plurality of first guides extending in the vertical direction along a first surface of the isolation plate facing the first cell block, and a plurality of second guides extending in the vertical direction along a second surface of the isolation plate facing the second cell block, and the plurality of venting channels may include a plurality of first venting channels defined by the plurality of first guides and a plurality of second venting channels defined by the plurality of second guides.

### [Advantageous Effects]

According to example embodiments of the present invention, a battery assembly includes cell blocks each having a plurality of battery cells, thus increasing energy density and achieving a large-scale module.

According to example embodiments of the present invention, an isolation structure is provided in a case to isolate neighboring cell blocks from each other, thereby preventing heat propagation between the cell blocks and improving the structural rigidity of the battery assembly. Furthermore, the isolation structure includes a plurality of venting channels communicating with venting holes of the case and thus a high-temperature gas or flame generated in the battery assembly can be quickly discharged to the outside. Therefore, the safety and reliability of the battery assembly including the cell blocks may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery assembly according to example embodiments of the present invention.
FIG. 2 is an exploded perspective view of the battery assembly of FIG. 1.
FIG. 3 is a plan view of a part of the battery assembly of FIG. 1.
FIG. 4 is a perspective view of an isolation structure included in the battery assembly of FIG. 1.
FIG. 5 is a cross-sectional view of a part of the battery assembly of FIG. 1.
FIG. 6 is a cross-sectional view of a battery pack according to embodiments of the present invention.
FIG. 7 is a schematic view of an electric vehicle in which a battery pack according to example embodiments of the present invention is mounted.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

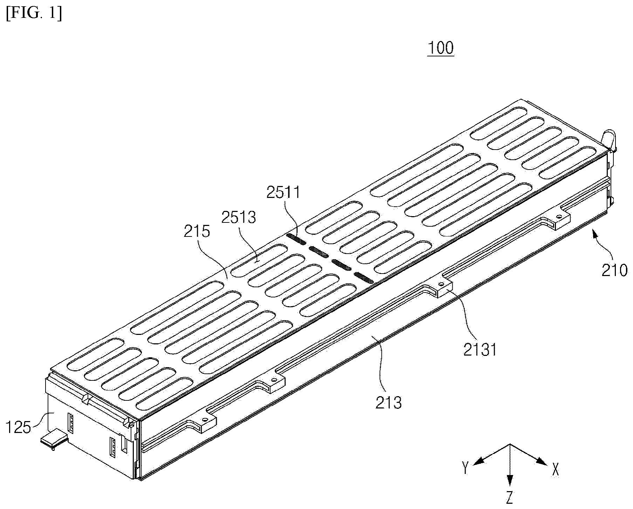

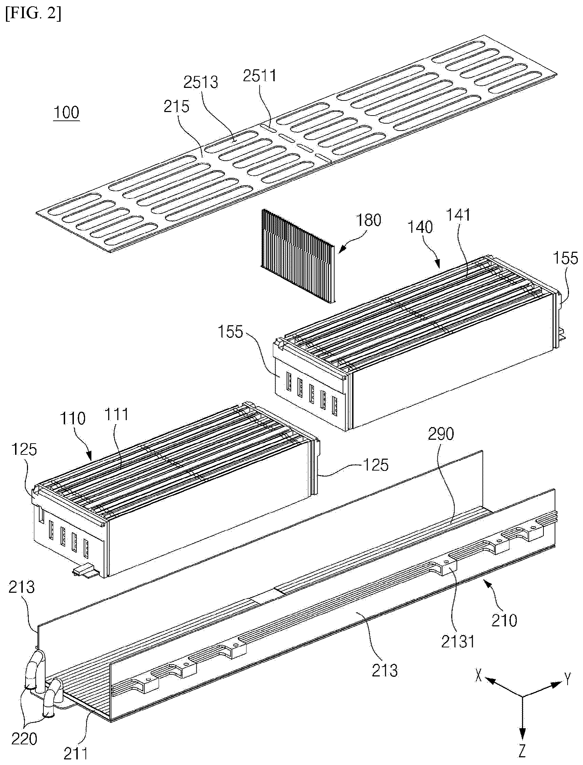

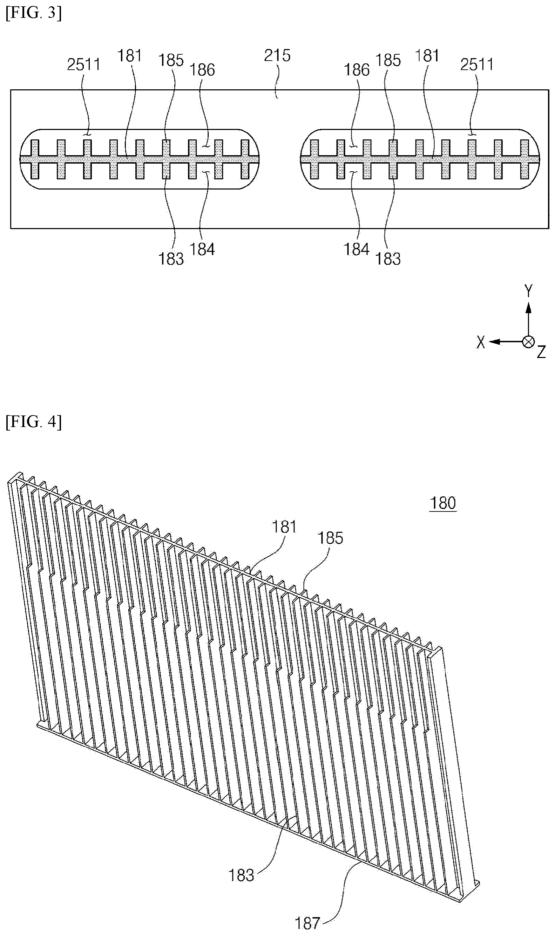

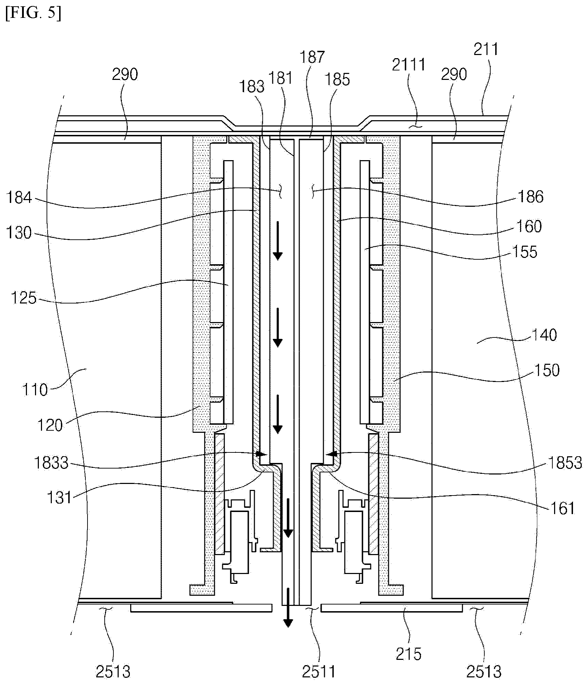

FIG. 1 is a perspective view of a battery assembly 100 according to example embodiments of the present invention. FIG. 2 is an exploded perspective view of the battery assembly 100 of FIG. 1. FIG. 3 is a plan view of a part of the battery assembly 100 of FIG. 1. FIG. 4 is a perspective view of an isolation structure 180 included in the battery assembly 100 of FIG. 1. FIG. 5 is a cross-sectional view of a part of the battery assembly 100 of FIG. 1.

Referring to FIGS. 1 to 5, the battery assembly 100 may include a first cell block 110 and a second cell block 140 that are arranged in a first horizontal direction (e.g., a Y-axis direction). The first cell block 110 and the second cell block 140 may be spaced apart from each other in the first horizontal direction (e.g., the Y-axis direction). FIGS. 1 and 2 illustrate that the battery assembly 100 includes two cell blocks but the number of cell blocks included in the battery assembly 100 is not limited to 2. For example, the battery assembly 100 may include two or more cell blocks arranged in the first horizontal direction (e.g., the Y-axis direction).

Each of the first cell block 110 and the second cell block 140 may include a plurality of battery cells. Each of the battery cells is a basic unit of a lithium ion battery, i.e., a secondary battery. Each of the battery cells may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

In each of the first cell block 110 and the second cell block 140, the plurality of battery cells may be connected in series and/or in parallel. For example, in each of the first cell block 110 and the second cell block 140, the plurality of battery cells may be connected in series. For example, in each of the first cell block 110 and the second cell block 140, the plurality of battery cells may be connected in parallel. For example, in each of the first cell block 110 and the second cell block 140, when a set of two or more battery cells connected in parallel is defined as a bank, one bank including two or more battery cells connected in parallel and another bank including two or more battery cells connected in parallel may be connected in series.

In each of the first cell block 110 and the second cell block 140, each battery cell may be a pouch type battery cell, a cylindrical battery cell, or a prismatic batteries cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, each battery cell may be a pouch type battery cell. In each of the first cell block 110 and the second cell block 140, the plurality of battery cells may be stacked together in a second horizontal direction (e.g., an X-axis direction). In example embodiments, in each of the first cell block 110 and the second cell block 140, the plurality of battery cells may be a pouch type battery cell whose length in the second horizontal direction (e.g., the X-axis direction) is less than a length thereof in the first horizontal direction (e.g., the Y-axis direction).

In the present disclosure, the battery cells included in the first cell block 110 may be referred to as first battery cells 111. Each of the first battery cells 111 may include a first electrode assembly, a first cell case accommodating the first electrode assembly, and a first electrode lead electrically connected to the first electrode assembly. Each of the first battery cells 111 may include a pair of first electrode leads. In each of the first battery cells 111, one of the pair of first electrode leads may protrude from one end of the first cell case in the first horizontal direction (e.g., the Y-axis direction), and the other may protrude from another end of the first cell case in the first horizontal direction (e.g., the Y-axis direction).

In the present disclosure, the battery cells included in the second cell block 140 may be referred to as second battery cells 141. Each of the second battery cells 141 may include a second electrode assembly, a second cell case accommodating the second electrode assembly, and a second electrode lead electrically connected to the second electrode assembly. Each of the second battery cells 141 may include a pair of second electrode leads. In each of the second battery cells 141, one of the pair of second electrode leads may protrude from one end of the second cell case in the first horizontal direction (e.g., the Y-axis direction), and the other may protrude from another end of the second cell case in the first horizontal direction (e.g., the Y-axis direction).

When viewed in a plan view, each of the first cell block 110 and the second cell block 140 may have a rectangular shape whose a length in the second horizontal direction (e.g., the X-axis direction) is less than a length thereof in the first horizontal direction (e.g., the Y-axis direction). Each of the first cell block 110 and the second cell block 140 may include two side surfaces facing each other in the second horizontal direction (e.g., the X-axis direction), a front surface and a rear surface facing each other in the first horizontal direction (e.g., the Y-axis direction), and a first surface (e.g., an upper surface) and a second surface (e.g., a lower surface) facing each other in a vertical direction (e.g., a Z-axis direction). The rear surface of the first cell block 110 may face the front surface of the second cell block 140.

A first bus bar frame 120 on which first bus bars 125 are mounted may be provided on the front and rear surfaces of the first cell block 110. The first bus bars 125 may include a first inter-bus bar and a first terminal bus bar. The first inter-bus bar may be coupled to the first electrode leads of different first battery cells 111 belonging to the first cell block 110 to electrically connect the different first battery cells 111. The first terminal bus bar may be coupled to at least one of the first electrode leads of the first battery cells 111. The first terminal bus bar may electrically connect the first cell block 110 to the second cell block 140 or another external electric device. One or more first inter-bus bars and one or more first terminal bus bars may be mounted on the first bus bar frame 120 on the front surface of the first cell block 110, and one or more first inter-bus bars and one or more first terminal bus bars may be mounted on the first bus bar frame 120 on the rear surface of the first cell block 110.

The battery assembly 100 may include first end plates 130 connected to the first bus bar frames 120. One of the first end plates 130 may cover the first bus bar frame 120 on the front surface of the first cell block 110 and may at least partially cover each of the first bus bars 125 on the first bus bar frame 120 on the front surface of the first cell block 110. The other first end plate 130 may cover the first bus bar frame 120 on the rear surface of the first cell block 110 and may at least partially cover each of the first bus bars 125 on the first bus bar frame 120 on the rear surface of the first cell block 110.

A second bus bar frame 150 on which second bus bars 155 are mounted may be provided on the front and rear surfaces of the second cell block 140. The second bus bars 155 may include a second inter-bus bar and a second terminal bus bar. The second inter-bus bar may be coupled to the second electrode leads of different second battery cells 141 belonging to the second cell block 140 to electrically connect the different second battery cells 141. The second terminal bus bar may be coupled to at least one of the second electrode leads of the second battery cells 141. The second terminal bus bar may electrically connect the second cell block 140 to the first cell block 110 or another external electric device. One or more second inter-bus bars and one or more second terminal bus bars may be mounted on the second bus bar frame 150 on the front surface of the second cell block 140, and one or more second inter-bus bars and one or more second terminal bus bars may be mounted on the second bus bar frame 150 on the rear surface of the second cell block 140.

The battery assembly 100 may include second end plates 160 connected to the second bus bar frames 150. One of the second end plates 160 may cover the second bus bar frame 150 on the front surface of the second cell block 140 and may at least partially cover each of the second bus bars 155 on the second bus bar frame 150 on the front surface of the second cell block 140. The other second end plate 160 may cover the second bus bar frame 150 on the rear surface of the second cell block 140 and may at least partially cover each of the second bus bars 155 on the second bus bar frame 150 on the rear surface of the second cell block 140.

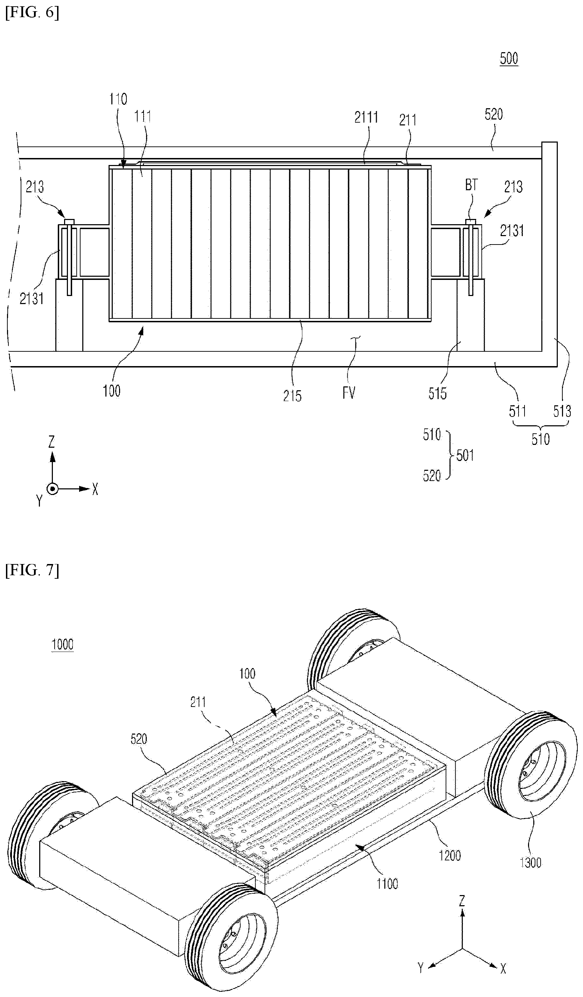

The battery assembly 100 may include a case 210 configured to accommodate the first cell block 110 and the second cell block 140 and to be fastened to and supported by an external pack housing 501 (see FIG. 6). The case 210 may include a first accommodation space for accommodating the first cell block 110 and a second accommodation space for accommodating the second cell block 140. The first accommodation space and the second accommodation space of the case 210 may be separated from each other by the isolation structure 180 to be described below. The case 210 may include a first cover plate 211, a pair of side cover plates 213, and a second cover plate 215. The first cover plate 211 may be referred to as an upper cover plate, and the second cover plate 215 may be referred to as a lower cover plate.

The first cover plate 211 may cover a first surface of the first cell block 110 and a first surface of the second cell block 140. The first cover plate 211 may be attached to the first surface of the first cell block 110 and the first surface of the second cell block 140, and be thermally coupled to the first cell block 110 and the second cell block 140. The first cover plate 211 may be attached to each of the first cell block 110 and the second cell block 140 through a thermally conductive adhesive layer 290. For example, the thermally conductive adhesive layer 290 may include a thermal resin and/or a thermal interface material (TIM).

The first cover plate 211 may include a cooling channel 2111 configured to allow a cooling fluid to flow therethrough and be configured to cool the first cell block 110 and the second cell block 140. The first cover plate 211 may be referred to as a cooling plate. The first cover plate 211 may be thermally coupled to the first cell block 110 and the second cell block 140 through a thermally conductive adhesive layer to cool the first cell block 110 and the second cell block 140. A cooling fluid supplied from the outside of the battery assembly 100 may flow into the cooling channel 2111 through a pipe 220 and an inlet of the cooling channel 2111, flow along the cooling channel 2111, be discharged through an outlet of the cooling channel 2111, and thereafter be discharged to the outside through another pipe 220. For example, the cooling channel 2111 may provide a single path from the inlet to the outlet. While the cooling fluid flows along the cooling channel 2111, the battery assembly 100 may be cooled. For example, the first cover plate 211 may be manufactured by bonding two plates together, and the cooling channel 2111 may include a space defined between the two plates.

The second cover plate 215 may cover a second surface of the first cell block 110 and a second surface of the second cell block 140. The second cover plate 215 may be spaced apart from the first cover plate 211 in the vertical direction (e.g., the Z-axis direction) with the first cell block 110 and the second cell block 140 interposed therebetween.

The second cover plate 215 may include a plurality of first venting holes 2511 and a plurality of second venting holes 2513 to exhaust a high-temperature gas generated in the first cell block 110 and/or the second cell block 140 to spaces outside the first cell block 110 and the second cell block 140. The plurality of first venting holes 2511 of the second cover plate 215 may overlap the isolation structure 180, which will be described below, in the vertical direction (e.g., the Z-axis direction). The plurality of first venting holes 2511 of the second cover plate 215 may be provided below the isolation structure 180. Some of the plurality of second venting holes 2513 of the second cover plate 215 may overlap the first cell block 110 in the vertical direction (e.g., the Z-axis direction), and the remaining second venting holes 2513 may overlap the second cell block 140 in the vertical direction (e.g., the Z-axis direction).

In example embodiments, each of the first venting hole 2511 may be an elliptical hole or a slot hole each having a major axis in the second horizontal direction (e.g., the X-axis direction). A length of the first venting holes 2511 in the first horizontal direction (e.g., the Y-axis direction) may be less than a length thereof in the second horizontal direction (e.g., the X-axis direction).

In example embodiments, each of the second venting hole 2513 may be an elliptical hole or a slot hole each having a major axis in the first horizontal direction (e.g., the Y-axis direction). A length of the second venting holes 2513 in the first horizontal direction (e.g., the Y-axis direction) may be greater than a length thereof in the second horizontal direction (e.g., the X-axis direction).

The two side cover plates 213 may be spaced apart from each other in the second horizontal direction (e.g., the X-axis direction) with the first cell block 110 and the second cell block 140 interposed therebetween. One of the two side cover plates 213 may cover a first side surface of the first cell block 110 and a first side surface of the second cell block 140 and be coupled to the first cover plate 211 and the second cover plate 215. The other side cover plate 213 may cover the second side surface of the first cell block 110 and a second side surface of the second cell block 140 and be coupled to the first cover plate 211 and the second cover plate 215. Each of the side cover plates 213 may include a plurality of fastening flanges 2131 to be fastened to and supported by the external pack housing 501 of FIG. 6.

In example embodiments, a cover sheet may be provided between the second cover plate 215 and the first cell block 110 and between the second cover plate 215 and the second cell block 140. The cover sheet may have heat resistance and fire resistance. For example, the cover sheet may cover the second surface of the first cell block 110 and the second surface of the second cell block 140. The cover sheet may include a plurality of cuts in an area overlapping the plurality of second venting holes 2513. Each of the plurality of cuts may be intended to allow a gas to be discharged therethrough.

The battery assembly 100 may include the isolation structure 180 between the first cell block 110 and the second cell block 140. The first end plate 130 may be spaced apart from the second end plate 160 with the isolation structure 180 interposed therebetween. The isolation structure 180 may be provided in the case 210. The isolation structure 180 may extend in the vertical direction (e.g., the Z-axis direction) between the first cover plate 211 and the second cover plate 215 of the case 210. The isolation structure 180 may isolate the first accommodation space and the second accommodation space from each other to block the flow of a gas between the first accommodation space in which the first cell block 110 is accommodated and the second accommodation space in which the second cell block 140 is accommodated. Furthermore, the isolation structure 180 may include a plurality of venting channels configured to guide a gas in a predetermined direction. For example, the plurality of venting channels of the isolation structure 180 may extend in the vertical direction (e.g., the Z-axis direction) to guide a gas in the vertical direction (e.g., the Z-axis direction) toward the first venting holes 2511 in the case 210.

The isolation structure 180 may include an isolation plate 181, a plurality of first guides 183, a plurality of second guides 185, and a connection plate 187. The isolation plate 181, the plurality of first guides 183, the plurality of second guides 185, and the connection plate 187 may be formed in one body and have the same material composition.

The isolation plate 181 may isolate the first accommodation space and the second accommodation space of the case 210 from each other. The isolation plate 181 may have a flat plate shape extending in the first horizontal direction (e.g., the Y-axis direction) and the vertical direction (e.g., the Z-axis direction).

The plurality of first guides 183 may extend in the vertical direction (e.g., the Z-axis direction) along a first surface of the isolation plate 181 facing the first cell block 110. Each of the first guides 183 may be a fin-shaped structure protruding from the first surface of the isolation plate 181 toward the first accommodation space of the case 210. The plurality of first guides 183 may be spaced apart from each other in the second horizontal direction (e.g., the X-axis direction) and extend parallel to each other. The plurality of first guides 183 may define a plurality of first venting channels 184 communicating with the first accommodation space. Among the plurality of first guides 183, two adjacent first guides 183 in the second horizontal direction (e.g., the X-axis direction) may define one first venting channel 184 extending in the vertical direction (e.g., the Z-axis direction). An upper part of each of the first venting channels 184 is blocked by the connection plate 187 and/or the first cover plate 211 and thus a high-temperature gas generated from the first battery cells 111 may be guided to the plurality of first venting channels 184 to flow downward. A width of the first venting channels 184 (i.e., a distance between two adjacent first guides 183 in the second horizontal direction (e.g., the X-axis direction) may be several millimeters to several tens of millimeters. For example, the width of the first venting channels 184 may be in a range between 1 mm and 10 mm, between 2 mm and 9 mm, between 3 mm and 8 mm, or between 4 mm and 7 mm.

Each of the plurality of first guides 183 may include a stepped part 1833 in contact with a stepped part 131 of the first end plate 130. A width of each of the first guides 183 in the first horizontal direction (e.g., the Y-axis direction) may vary according to the stepped part 1833. For example, a width of an upper part of each of the first guides 183 in the first horizontal direction (e.g., the Y-axis direction) may be less than a width of a lower part thereof in the first horizontal direction (e.g., the Y-axis direction).

The plurality of second guides 185 may extend in the vertical direction (e.g., the Z-axis direction) along a second surface of the isolation plate 181 facing the second cell block 140. Each of the second guides 185 may be a fin-shaped structure protruding from the second surface of the isolation plate 181 toward the second accommodation space of the case 210. The plurality of second guides 185 may be spaced apart from each other in the second horizontal direction (e.g., the X-axis direction) and extend parallel to each other. The plurality of second guides 185 may define a plurality of second venting channels 186 communicating with the second accommodation space. The plurality of second venting channels 186 may be separated or isolated from the plurality of first venting channels 184 by the isolation plate 181. Among the plurality of second guides 185, two adjacent second guides 185 in the second horizontal direction (e.g., the X-axis direction) may define one second venting channel 186 extending in the vertical direction (e.g., the Z-axis direction). An upper part of each of the second venting channels 186 is blocked by the connection plate 187 and/or the first cover plate 211 and thus a high-temperature gas generated from the second battery cells 141 may be guided to the plurality of second venting channels 186 to flow downward. A width of the second venting channels 186 (i.e., a distance between two adjacent second guides 185 in the second horizontal direction (e.g., the X-axis direction) may be several millimeters to several tens of millimeters. For example, the width of the second venting channels 186 may be in a range between 1 mm and 10 mm, between 2 mm and 9 mm, between 3 mm and 8 mm, or between 4 mm and 7 mm. The width of the first venting channels 184 may be the same as the width of the second venting channels 186.

Each of the plurality of second guides 185 may include a stepped part 1853 in contact with a stepped part 161 of the second end plate 160. A width of each of the second guides 185 in the first horizontal direction (e.g., the Y-axis direction) may vary according to the stepped part 1853. For example, a width of an upper part of each of the second guides 185 in the first horizontal direction (e.g., the Y-axis direction) may be less than a width of a lower part thereof in the first horizontal direction (e.g., the Y-axis direction).

When viewed in a plan view, the first venting hole 2511 in the second cover plate 215 may overlap an end of each of corresponding first guides 183 and an end of each of corresponding second guides 185 in the vertical direction (e.g., the Z-axis direction). The first venting hole 2511 may overlap and communicate with the corresponding first venting channels 184 and the corresponding second venting channels 186 in the vertical direction (e.g., the Z-axis direction).

The connection plate 187 may be connected to an upper end of the isolation plate 181. The connection plate 187 may have a flat plate shape extending approximately in the first horizontal direction (e.g., the Y-axis direction) and the second horizontal direction (e.g., the X-axis direction). The connection plate 187 may be attached to the first cover plate 211. As the connection plate 187 is attached to the first cover plate 211, the isolation structure 180 may be fixed to the first cover plate 211. The connection plate 187 may be connected to an end of each of the plurality of first guides 183 and an end of each of the plurality of second guides 185.

According to example embodiments of the present invention, the battery assembly 100 includes cell blocks (e.g., the first cell block 110 and the second cell block 140) each including a plurality of battery cells, thus increasing energy density and achieving a large-scale module.

According to example embodiments of the present invention, the isolation structure 180 is provided in the case 210 to isolate neighboring cell blocks from each other, thereby preventing heat propagation between the cell blocks and improving the structural rigidity of the battery assembly 100. Furthermore, the isolation structure 180 includes a plurality of venting channels communicating with the venting holes of the case 210 and thus a high-temperature gas or flame generated in the battery assembly can be quickly discharged to the outside. Therefore, the safety and reliability of the battery assembly 100 including the cell blocks may improve.

### (Second Embodiment)

FIG. 6 is a cross-sectional view of a battery pack 500 according to example embodiments of the present invention. Hereinafter, a description of parts of the battery pack 500 that are the same as those described above will be omitted or simplified.

Referring to FIG. 6, the battery pack 500 may include a pack housing 501, and a battery assembly 100 on the pack housing 501. The battery pack 500 may include one or more battery assemblies 100 on the pack housing 501.

The pack housing 501 may include a lower housing 510 with an accommodation space for accommodation of the battery assembly 100, and a pack lid 520 coupled to the lower housing 510 to cover the lower housing 510 in which the battery assembly 100 is accommodated. The accommodation space of the lower housing 510 may be defined by a bottom plate 511 facing a lower surface of the battery assembly 100 and side walls 513 on edges of the bottom plate 511. A plurality of support structures 515 may be provided on the bottom plate 511 of the lower housing 510 to support the battery assembly 100. The plurality of support structures 515 may be spaced apart from each other in the second horizontal direction (e.g., the X-axis direction) and extend in the first horizontal direction (e.g., the Y-axis direction). A length of each of the support structures 515 in the first horizontal direction (e.g., the Y-axis direction) may be equal to or greater than a length of the battery assembly 100 in the first horizontal direction (e.g., the Y-axis direction).

The battery assembly 100 may be mounted on the pack housing 501 in the side mounting manner. The plurality of support structures 515 extending in the first horizontal direction (e.g., the Y-axis direction) may be provided on the bottom plate 511 of the pack housing 501, and the battery assembly 100 may be fastened to the plurality of support structures 515 by a fastening member such as a bolt BT. More specifically, the battery assembly 100 may be mounted on the pack housing 501 by fastening the fastening flanges 2131 of the side cover plates 213 to corresponding support structures 515 among the plurality of support structures 515 by the bolt BT. The plurality of first battery cells 111 of the first cell block 110 may be arranged in the second horizontal direction (e.g., the X-axis direction) between the pair of side cover plates 213 supported by the plurality of support structures 515, and the plurality of second battery cells 141 of the second cell block 140 may be arranged in the second horizontal direction (e.g., the X-axis direction) between the pair of side cover plates 213 supported by the plurality of support structures 515. Because the plurality of first battery cells 111 and the plurality of second battery cells 141 are supported by the pair of side cover plates 213, a thickness change due to swelling of the plurality of first battery cells 111 and a thickness change due to swelling of the plurality of second battery cells 141 may be suppressed.

When the battery pack 500 is mounted in a vehicle, a cabin room in which a passenger rides may be located above the pack lid 520, and the ground on which the vehicle travels may be located below the lower housing 510.

The battery assembly 100 may be supported by the support structure 515 on the bottom plate 511 of the lower housing 510 in the side mounting manner, and a free volume FV may be formed between the bottom plate 511 of the lower housing 510 and the battery assembly 100 as the bottom plate 511 of the lower housing 510 and the battery assembly 100 are spaced apart from each other in the vertical direction (e.g., the Z-axis direction). The plurality of support structures 515 may support the pair of side cover plates 213 of the case 210 such that the case 210 is spaced apart from the bottom plate 511 of the pack housing 501. A gas and flames generated in a thermal runaway situation may move through the free volume FV. That is, the free volume FV functions as a venting passage through which a high-temperature gas and flames may move. The free volume FV may be referred to as a venting space.

A first venting hole 2151 of FIG. 5 and a second venting hole 2153 of FIG. 5 in the second cover plate 215 of the case 210 may communicate with a space (i.e., the free volume FV) formed as the case 210 is spaced apart from the bottom plate 511. In the battery pack 500, the battery assembly 100 may have a downward venting structure for venting a high-temperature gas downward. A high-temperature gas and flames generated in the battery assembly 100 may be discharged to the free volume FV between the second cover plate 215 of the case 210 and the bottom plate 511 through the first venting hole 2151 and the second venting hole 2153 in the second cover plate 215 of the case 210. The high-temperature gas and flame discharged downward from the battery assembly 100 may flow to a venting device (e.g., a relief valve) on the lower housing 510 through the free volume FV, and be discharged to the outside of the battery pack 500 through the venting device.

Even when strong impact is generated due to a foreign material splashing to a lower part of a vehicle when driving on a hard ground such as a non-paved road, the impact may be absorbed through the free volume FV. Therefore, the battery assembly 100 may be prevented from being damaged due to the impact. The free volume FV may include an empty space between the battery assembly 100 and the lower housing 510. When the lower housing 510 is deformed toward the battery assembly 100 due to an impact applied to a lower part of the vehicle, the free volume FV may freely allow deformation of the lower housing 510 to some extent.

A height of the free volume FV and a distance between the bottom plate 511 of the lower housing 510 and the battery assembly 100 may be determined enough to absorb external impact. The height of the free volume FV may be determined in consideration of dimensions and rigidity of frames of the vehicle, dimensions and rigidity of the lower housing 510, dimensions of the battery pack 500, the amount of a generated gas and a gas discharge rate during thermal runaway, and the like. For example, when a thickness or rigidity of the frames of the vehicle or the bottom plate 511 of the lower housing 510 is relatively large, at least one of the size and height of the free volume FV may be relatively reduced. When the thickness or rigidity of the frames of the vehicle or the bottom plate 511 of the lower housing 510 is relatively small, the bottom plate 511 of the lower housing 510 is highly likely to deform and thus at least one of the size and height of the free volume FV may be relatively increased to protect the battery assembly 100. When the size of the battery pack 500 is relatively large compared to the specifications of the battery pack 500, a relatively large free volume FV may be secured. When the size of the battery pack 500 is relatively small, a height of the free volume FV to be secured may be relatively small and thus the thickness and rigidity of the bottom plate 511 of the lower housing 510 may be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of a generated gas and a gas discharge rate.

A maximum height of the free volume FV may be determined according to a damage tolerance of the battery cell 111 included in the battery assembly 100. For example, when damage tolerance of the battery cell 111 is 1 mm, the free volume FV may be determined to prevent the battery cell 111 from deforming by more than 1 mm when the lower housing 510 deforms and presses a lower surface of the battery cell 111. In this case, a degree of deformation of the lower housing 510 may vary according to the thickness or rigidity of the lower housing 510. Therefore, the size or height of the free volume FV may be determined in consideration of all the damage tolerance of the battery cell 111 and the thickness and rigidity of the lower housing 510.

In example embodiments, the upper surface of the battery assembly 100 or the first cover plate 211 of the case 210 may be in close contact with the lower surface of the pack lid 520. For example, the first cover plate 211 of the case 210 may be attached to the pack lid 520 by an adhesive layer. In example embodiments, the battery assembly 100 may be supported while being hung from the pack lid 520. When there is a space between the battery assembly 100 and the pack lid 520, a high-temperature gas may flow into the space between the battery assembly 100 and the pack lid 520 during thermal runaway, and heat and flames may propagate to adjacent battery assemblies 100 and also be transferred to the pack lid 520, and thus, the cabin room above the pack lid 520 may be influenced by the heat and the flames. Therefore, a gas or flames generated in the battery pack 500 may be guided to the free volume FV by bringing the upper surface of the battery assembly 100 and the lower surface of the pack lid 520 into close contact with each other.

### (Third Embodiment)

FIG. 7 is a schematic view of an electric vehicle 1000 in which a battery pack 1100 according to example embodiments of the present invention is mounted.

For the sake of simplicity, FIG. 7 illustrates only a vehicle body frame 1200 which is a lower frame of the electric vehicle 1000, a battery pack 1100 coupled to the vehicle body frame 1200, and driving wheels 1300 mounted on the vehicle body frame 1200. The battery pack 1100 may include the battery pack 500 described above with reference to FIG. 6. The battery pack 1100 may be mounted on the vehicle body frame 1200 such that the bottom plate 511 of the pack housing 501 faces the ground on which the electric vehicle 1000 travels.

In the case of a general battery pack, a battery module is installed at the bottom of a pack housing of the battery pack. In embodiments, the free volume FV of FIG. 6 may be provided below the battery assembly 100 of the battery pack 1100, and there may be no space or a very narrow space between the battery assembly 100 and the pack lid 520. Accordingly, a gas generated in the battery assembly 100 may be prevented from being transferred to a cabin room corresponding to an upper part of the electric vehicle 1000 and be guided to the free volume FV between the battery assembly 100 and the pack housing 501 of the battery pack 1100. The gas may flow through the free volume FV and thereafter be discharged from a lower side of the electric vehicle 1000 through a gas exhaust installed in the battery pack 1100. The gas exhaust of the battery pack 1100 may include a relief valve on the side wall 513 of the pack housing 501. According to the present embodiments, in the battery pack 1100, the free volume FV is provided between the battery assembly 100 and the pack housing 501 to prevent the battery assembly 100 from being damaged regardless of the deformation of the pack housing 501.

According to embodiments of the present invention, the battery pack 1100 and the electric vehicle 1000 including the battery pack 1100 are capable of increasing the safety of passengers. In addition, the battery assembly 100 that is a key component can be protected and the durabilities of the battery pack 1100 and the electric vehicle 1000 can be enhanced.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing; and
a battery assembly accommodated in the pack housing,
wherein the battery assembly comprises:
a first cell block with a plurality of first battery cells;
a second cell block with a plurality of second battery cells;
a case including a first accommodation space for accommodation of the first cell block and a second accommodation space for accommodation of the second cell block, the case being supported by the pack housing; and
an isolation structure provided between the first cell block and the second cell block to partition the first accommodation space and the second accommodation space of the case, the isolation structure including a plurality of venting channels extending in a vertical direction,
the case comprises a first venting hole overlapping the isolation structure in the vertical direction, and
the plurality of venting channels of the isolation structure communicate with a venting space between the case and the pack housing through the first venting hole of the case.

2. The battery pack of claim 1, wherein the case comprises:
a first cover plate facing an upper surface of the first cell block and an upper surface of the second cell block;
a second cover plate facing a lower surface of the first cell block and a lower surface of the second cell block, and including the first venting hole; and
a pair of side cover plates spaced apart from each other in a horizontal direction with the first cell block and the second cell block interposed therebetween, the pair of side cover plates being coupled to the first cover plate and the second cover plate, respectively, and
the pack housing comprises:
a bottom plate spaced apart from the second cover plate with the venting space therebetween; and
a plurality of support structures provided on the bottom plate and configured to support the pair of side cover plates,
wherein the plurality of support structures support the pair of side cover plates to cause the case to be spaced apart from the bottom plate of the pack housing.

3. The battery pack of claim 2, wherein each of the pair of side cover plates comprises a fastening frame configured to be fastened to a corresponding support structure among the plurality of support structures.

4. The battery pack of claim 2, wherein the plurality of first battery cells are arranged between the pair of side cover plates in the horizontal direction, and
the plurality of second battery cells are arranged between the pair of side cover plates in the horizontal direction.

5. The battery pack of claim 2, wherein the second cover plate further comprises a plurality of second venting holes communicating with the venting space,
wherein the plurality of second venting holes overlap the first cell block or the second cell block in the vertical direction.

6. The battery pack of claim 2, wherein the first cover plate comprises a cooling channel configured to allow a cooling fluid to flow therethrough.

7. The battery pack of claim 6, further comprising a thermally conductive adhesive layer configured to attach each of the first cell block and the second cell block to the first cover plate.

8. The battery pack of claim 2, wherein the pack housing further comprises a pack lid configured to cover the battery assembly,
wherein the pack lid is in contact with the first cover plate of the case.

9. The battery pack of claim 1, wherein the isolation structure comprises:
an isolation plate between the first cell block and the second cell block; and
a plurality of first guides extending in the vertical direction along a first surface of the isolation plate facing the first cell block,
wherein the plurality of venting channels comprise a plurality of first venting channels defined by the plurality of first guides.

10. The battery pack of claim 9, wherein the isolation structure further comprises a plurality of second guides extending in the vertical direction along a second surface of the isolation plate facing the second cell block,
wherein the plurality of venting channels further comprise a plurality of second venting channels defined by the plurality of second guides.

11. The battery pack of claim 10, further comprising:
a first bus bar frame on which a first bus bar connected to the first cell block is mounted;
a first end plate configured to cover the first bus bar frame;
a second bus bar frame on which a second bus bar connected to the second cell block is mounted; and
a second end plate configured to cover the second bus bar frame, and spaced apart from the first end plate with the isolation structure therebetween,
wherein each of the plurality of first guides comprises a stepped part in contact with a stepped part of the first end plate, and
each of the plurality of second guides comprises a stepped part in contact with a stepped part of the second end plate.

12. The battery pack of claim 9, wherein the isolation structure further comprises a connection plate connected to an upper end of the isolation plate and attached to the case.

13. An electric vehicle comprising:
a vehicle body frame; and
a battery pack including a pack housing mounted on the vehicle body frame and a battery assembly accommodated in the pack housing,
wherein the battery assembly comprises:
a first cell block including a plurality of first battery cells;
a second cell block with a plurality of second battery cells;
a case including a first accommodation space for accommodation of the first cell block and a second accommodation space for accommodation of the second cell block, the case being supported by the pack housing; and
an isolation structure provided between the first cell block and the second cell block to partition the first accommodation space and the second accommodation space of the case, the isolation structure including a plurality of venting channels extending in a vertical direction,
the case comprises a first venting hole overlapping the isolation structure in the vertical direction, and
the plurality of venting channels of the isolation structure communicate with a venting space between the case and the pack housing through the first venting hole of the case.

14. The electric vehicle of claim 13, wherein the case comprises:
a first cover plate facing an upper surface of the first cell block and an upper surface of the second cell block, and including a cooling channel configured to allow a cooling fluid to flow therethrough;
a second cover plate facing a lower surface of the first cell block and a lower surface of the second cell block, and including the first venting hole; and
a pair of side cover plates spaced apart from each other in a horizontal direction with the first cell block and the second cell block interposed therebetween, the pair of side cover plates being coupled to the first cover plate and the second cover plate, respectively,
the pack housing comprises:
a bottom plate spaced apart from the second cover plate with the venting space therebetween; and
a plurality of support structures provided on the bottom plate and configured to support the pair of side cover plates,
the plurality of support structures support the pair of side cover plates to cause the case to be spaced apart from the bottom plate of the pack housing,
the plurality of first battery cells are arranged between the pair of side cover plates in the horizontal direction, and
the plurality of second battery cells are arranged between the pair of side cover plates in the horizontal direction.

15. The electric vehicle of claim 13, wherein the isolation structure comprises:
an isolation plate between the first cell block and the second cell block;
a connection plate connected to an upper end of the isolation plate and attached to the case;
a plurality of first guides extending in the vertical direction along a first surface of the isolation plate facing the first cell block; and
a plurality of second guides extending in the vertical direction along a second surface of the isolation plate facing the second cell block, and
the plurality of venting channels comprise a plurality of first venting channels defined by the plurality of first guides and a plurality of second venting channels defined by the plurality of second guides.
